# EUROPEAN PATENT SPECIFICATION

(11) **EP 3 907 978 B1**
(45) Date of publication and mention of the grant of the patent: **17.04.2024**
(21) Application number: 20173753.3
(22) Date of filing: 08.05.2020
(51) Int. Cl.: H04M 3/42, H04M 3/40, H04M 3/56

(54) **COMPUTER-IMPLEMENTED METHOD OF CONTROLLING A PLURALITY OF COMMUNICATION DEVICES AND COMMUNICATION SYSTEM**
COMPUTERIMPLEMENTIERTES VERFAHREN ZUR STEUERUNG EINER VIELZAHL VON KOMMUNIKATIONSVORRICHTUNGEN UND KOMMUNIKATIONSSYSTEM
PROCÉDÉ MIS EN OEUVRE PAR ORDINATEUR PERMETTANT DE COMMANDER UNE PLURALITÉ DE DISPOSITIFS DE COMMUNICATION ET SYSTÈME DE COMMUNICATION

(43) Date of publication of application: 10.11.2021
(73) Proprietor: Unify Patente GmbH & Co. KG, 81739 München (DE)
(72) Inventor: LEDERER, Thomas, 82211 Herrsching (DE)
(74) Representative: Schaafhausen Patentanwälte PartGmbB

(56) References cited:
- US-A1- 2014 171 047
- US-A1- 2015 304 121

## Description

The present invention relates to a computer-implemented method and system of controlling a mute function on a plurality of communication devices and to a communication system.

In today's world, more and more users own and use a plurality of communication devices.

Often, these communication devices, as e.g. a mobile phone, a desk phone, and a communication app on a PC, are used in parallel. For example, while actively participating in an audio conference on the PC in free speaking mode in a home office environment, a call may come in on the mobile device. However, when accepting the incoming call on the mobile device, the user may forget to mute the microphone on the PC, on which he or she is participating in the ongoing audio conference session. This could cause an embarrassing situation, if one is not aware that the conversation on the mobile phone is now unconsciously heard in the conference call on the PC.

This situation also may arise if the user wants to quickly call somebody for a side talk without leaving the conference call but forgetting to mute the microphone for the conference call while doing so.

Moreover, the problem of disturbing the ongoing conference call also arises, if somebody enters the room - for example, one's spouse or a kid is entering the home office and asking a question or the door bell is ringing and one needs to step out while forgetting to mute the microphone.

In addition, devices with a voice operated assistant functionality e.g., the assistant "Alexa" on an Amazon Echo device, the Google Assistant on a smartphone or on a Google Home device, "Siri" on an Apple Homepod - have a built-in microphone. If such a device is in the same room as the PC on which a conference call is being held and since the assistant device or assistant functionality is normally always activated, the trigger / wake-up word may accidentally be picked up and the conference call will then be disturbed by the virtual assistant talking.

Document US2015/304121A1 A1 describes a meeting server that receives a request to join an online conference session from a first device at a first location, wherein the first device is associated with a user account, wherein the meeting server then determines at least one second location corresponding to at least one second device also associated with the user account and responsive to a determination that the second location is within a predetermined distance of the first location, the meeting server transmits a command to mute the second device.

Therefore, the present invention is based on the object to provide a computer-implemented method and a communication system for avoiding the above described situation. In particular, the present invention aims at providing a muting mechanism for a plurality of communication devices used by a user that avoids that a user inadvertently communicates via several communication devices at the same time.

This object is solved according to the present invention by a computer-implemented method of controlling a plurality of communication devices having the features according to claim 1, and a communication system having the features according to claim 9.

Preferred embodiments of the invention are specified in the respective dependent claims.

According to the present invention, a computer-implemented method according to claim 1 is provided.

Therefore, according to the present invention, the mute functionality may be controlled on a plurality of devices that are associated to one user such that at any given point of time, only one of the user' devices will have the microphone unmuted. Therefore, the above described situations may efficiently be avoided. For example, if a user now would be participating in an audio conference using his or her PC in free speaking mode, e.g., in a home office environment, and he or she simultaneously receives an incoming call on his or her mobile device, then - as the user picks up the phone - all other communication devices, except for the one currently used for making the phone call will automatically be muted. The same applies, if the user wants to quickly call somebody for a side talk as while he or she is dialing a number on another communication device, upon dialing, all other communication devices, except for the one currently used for making the phone call will automatically be muted.

In addition, devices with a voice operated assistant functionality e.g. the assistant "Alexa" on an Amazon Echo device, the Google Assistant on a smartphone or on a Google Home device, "Siri" on an Apple Homepod - which also have a built-in microphone may be prevented from accidentally being activated, e.g. in a situation that such a device is in the same room as the PC on which a conference call is being held. Thus, according to the present invention, it is avoided that the assistant device or assistant functionality which usually is always activated, will receive a trigger or wake-up word accidentally and then starts to talk resulting in the conference call being disturbed by the virtual assistant talking.

According to a preferred embodiment of the invention, the unmuting of the microphone of the first communication device of the plurality of communication devices results from the user operating a mute/unmute means provided at the first communication device. According to another preferred embodiment of the invention, the unmuting step of the first communication device of the plurality of communication devices results automatically by the user accepting a call or placing a call or entering a WebRTC collaboration and/or communication session at the first communication device of the plurality of communication devices.

It also is preferable, if each communication device of the plurality of communication devices comprises a microphone control unit, which monitors and controls its local microphone mute functionality.

According to another preferred embodiment of the invention, the control units of the communication devices of the plurality of communication devices communicate with each other via the central service.

Alternatively, the control units of the communication devices of the plurality of communication devices may communicate with each other via respective broadcasting means.

Preferably, all communication devices of the plurality of communication devices are located within a predetermined distance from each other, in particular, in a room or in a building.

Further, it is advantageous, if the unmuting of the first communication device of the plurality of communication devices further results from receiving a signal from a sensor, in particular a door sensor, a motion sensor, or from the ringing of a doorbell.

According to this preferred embodiment, further, a situation may be avoided, if e.g., during an ongoing conference call somebody enters the room and starts talking, or if the door bell is ringing and one needs to step out forgetting to mute the microphone.

Moreover, according to the present invention, a communication system according to claim 9 is provided.

The invention and embodiments thereof will be described below in further detail in connection with the drawing.

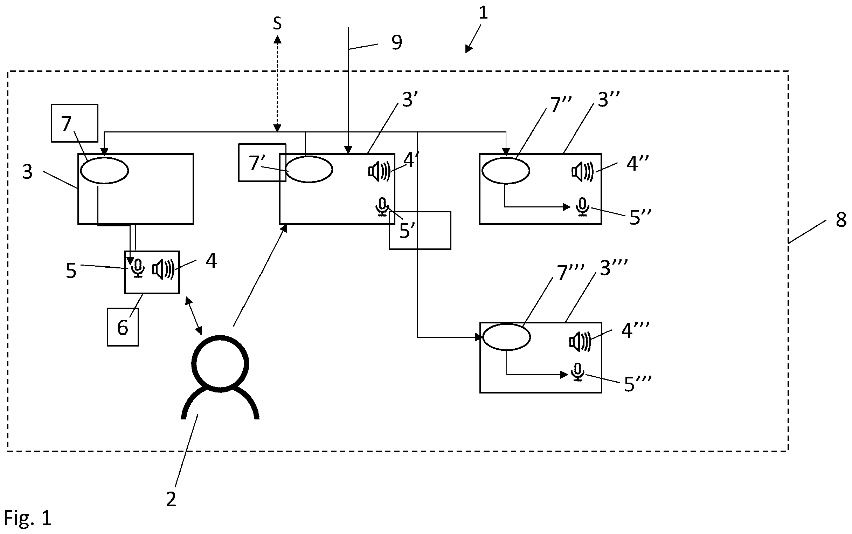

- Fig. 1: schematically illustrates a communication system according to an embodiment of the invention.

Fig. 1 schematically illustrates a communication system 1 according to an embodiment of the invention. According to the scenario depicted, a user 2 has four communication devices 3, 3', 3", 3‴ that are assigned to him. The first communication device 3 is a PC with a USB 6 connected speakerphone with loudspeaker 4 and microphone 5. The second communication device 3' in this embodiment is an IP deskphone comprising a loudspeaker 4' and a microphone 5'. The third communication device 3", here, is a smart phone with a loudspeaker 4" and a microphone 5". Finally, the fourth communication device 3‴ is embodied as a smart assistant device, e.g. Amazon Echo Dot with a microphone 4‴ and a loudspeaker 5"'. It is noted, that the terms "first", "second", "third", and "fourth" communication devices, of course, are interchangeable and only indicate an arbitrary numbering of the communication devices of the plurality of communication devices assigned to the user.

Every telecommunication device 3, 3', 3", 3‴ of the plurality of communication devices comprises a respective microphone control unit 7, 7', 7", 7‴ which monitors and controls the local microphone mute functionality of the respective telecommunication devices 3, 3',3", 3"'. Moreover, the control units 7, 7', 7", 7‴ communicate with each other via a registration to a central service S with which all of the user's devices 3, 3', 3", 3‴ are registered or, alternatively, via broadcasting mechanisms. The latter may, for example, include sending inaudible sound via the local loudspeaker or a notification via Bluetooth low energy or via an IP protocol.

These communication devices 3, 3', 3", 3‴ that are assigned to the user 2 are all located in one room 8, in which the user 2 is engaged in an active telephone conference on the first communication device 3 using free speaking over the USB connected speakerphone 6 comprising the loudspeaker 4 and the microphone 5 with the microphone 5 being unmuted. Now, an incoming phone call 9 is received, for example, at the second communication device 3'. The call is accepted by the user 2 by pressing a button on the communication device 3' or by performing a swiping gesture. The control unit 7' of the second communication device 3', upon receiving the phone acceptance instruction as outlined above, will generate a message comprising information on the use and consequently, on unmuting, the second communication device 3'. The message is distributed to all other communication devices 3, 3", 3‴ assigned to the user 2 so as to inform their respective other control units 7, 7", 7‴ via a peer-to-peer protocol, in particular, via Bluetooth, or even alternatively via an inaudible signal transmitted from the loudspeaker 4' of the second communication device 3'.

Alternatively the message generated by the second communication device 3' may be distributed via communication to a central service S with which all control units 7, 7', 7", 7‴ are registered.

The control units 7, 7", 7‴ thus receiving the message will now put their respective microphones 5, 5", 5‴ to mute. Therefore, if the user 2 now answers the phone call on his/her deskphone (second communication device 3'), his or her voice will only be picked up by the microphone 5', since all other associated communication devices 3, 3", 3‴ of the user 2 are muted.

Moreover, since the user 2 is still participating in the conference using the first communication device 3, he or she might want to answer a question or say something to the conference participants while being involved in the phone call on his or her second communication device 3' . In this situation, now, the user manually unmutes the microphone 5 at the first communication device 3 again, which in turn triggers the above described procedure, namely, generating a message and distributing the latter to the other communication devices 3', 3", 3‴ causing the latter to trigger activation of microphone mute, as described above.

If - for example - the user 2 now would like to make a parallel outgoing private call on his or her mobile device (in this embodiment, the third communication device 3") and dials a number, the control unit 7" of the third communication device 3" will monitor the communication activity on D3 and, again, will notify - by generating and distributing the information message as outlined above - all other control units 7, 7', 7‴ so as to mute the respective microphones 5, 5' 5‴ automatically.

Similarly - if the user 2 wants to use the speech assistant, namely, according to this embodiment the fourth communication device 3"', he or she would unmute the Echo Dot speaker 4"', thereby, effecting the muting procedure outlined above, namely, generating a message to be distributed to the other communication devices 3, 3', 3" so as to trigger a mute activation of their respective microphones 5, 5', 5".

Further, according to an embodiment, also one or more sensors (not shown) may be provided or connected devices (e.g. IoT sensors or devices) of the users' environment - e.g. a door sensor of the home office room, or a motion sensor at the entrance, or ringing the doorbell of the house could be used to trigger the mute functionality according to the procedure described above. Thus, situations can be avoided efficiently in which, for example, an ongoing telephone conference is disturbed by another person entering the room in which the telecommunication devices are located and stating to talk to the user assigned to these telecommunication devices.

### Reference numerals

- 1: communication system
- 2: user
- 3: 3', 3", 3‴ communication device
- 4: 4', 4", 4‴ loudspeaker
- 5: 5', 5", 5‴ microphone
- 6: USB speakerphone
- 7: 7', 7", 7‴ control unit
- 8: room
- 9: incoming phone call

## Claims

1. Computer-implemented method of controlling a plurality of communication devices (3, 3', 3", 3‴) that are connected to each other via a communication network, wherein the plurality of communication devices (3, 3', 3", 3‴) is assigned to a user (2), the method comprising the steps of
- unmuting a microphone (5) of a first communication device (3) of the plurality of communication devices (3, 3', 3", 3‴);
- generating, by the first communication device (3) of the plurality of communication devices (3, 3', 3", 3‴), a message including information that the first communication device (3) is unmuted;
- distributing, by the first communication device (3) of the plurality of communication devices (3, 3', 3", 3‴), the message to the other communication devices (3', 3", 3‴) of the plurality of communication devices (3, 3', 3", 3‴) so that, upon receipt of the message at the other communication devices (3', 3", 3‴) of the plurality of communication devices (3, 3', 3", 3‴), the respective microphones (5', 5", 5‴) of the other communication devices (3', 3", 3‴) of the plurality of communication devices (3, 3', 3", 3‴) automatically are muted,
**characterized in that**
the distributing step of the message is carried out by transmitting the message from the first communication device (3) respectively to the other communication devices (3', 3", 3‴) directly, in particular, by means of peer-to-peer communication, in particular, via XMPP or MQTT, by near field communication, in particular, via Bluetooth.

2. Computer-implemented method according to claim 1, wherein the unmuting of the first communication device (3) of the plurality of communication devices (3, 3', 3", 3‴) results from the user (2) operating a mute/unmute means provided at the first communication device (3).

3. Computer-implemented method according to claim 1, wherein the unmuting of the first communication device (3) of the plurality of communication devices (3, 3', 3", 3‴) automatically results from accepting a call or placing a call or entering a WebRTC collaboration and/or communication session at the first communication device (3) of the plurality of communication devices (3, 3', 3", 3‴).

4. Computer-implemented method according to any one of the preceding claims, wherein each communication device (3) of the plurality of communication devices (3, 3', 3", 3‴) comprises a microphone control unit (7, 7', 7", 7‴), which monitors and controls its local microphone mute functionality.

5. Computer-implemented method according to claim 4, wherein the control units (7, 7', 7", 7‴) of the communication devices of the plurality of communication devices (3, 3', 3", 3‴) communicate with each other via the central service (S).

6. Computer-implemented method according to claim 4, wherein the control units (7, 7', 7", 7‴) of the communication devices of the plurality of communication devices (3, 3', 3", 3‴) communicate with each other via respective broadcasting means.

7. Computer-implemented method according to any one of the preceding claims, wherein all communication devices of the plurality of communication devices (3, 3', 3", 3‴) are located within a predetermined distance from each other, in particular, in a room (8) or in a building.

8. Computer-implemented method according to any one of the preceding claims, wherein the unmuting of the first communication device (3) of the plurality of communication devices (3, 3', 3", 3‴) further results from receiving a signal from a sensor, in particular a door sensor, a motion sensor, or from the ringing of a doorbell.

9. Communication system (1) comprising a plurality of communication devices (3, 3', 3", 3‴) being connected to each other via a communication network and being assigned to one user (2), wherein each communication device (3, 3', 3", 3‴) comprises a microphone control unit (7, 7', 7", 7‴), which is adapted to monitor and control its local microphone mute functionality according to the method according to any one of the preceding claims.

## Patentansprüche

1. Computer-implementiertes Verfahren zur Steuerung einer Vielzahl von Kommunikationsgeräten (3, 3', 3", 3‴), die über ein Kommunikationsnetzwerk miteinander verbunden sind, wobei die Vielzahl von Kommunikationsgeräten (3, 3', 3", 3‴) einem Benutzer (2) zugeordnet ist, wobei das Verfahren die folgenden Schritte umfasst
- Aufhebung der Stummschaltung eines Mikrofons (5) eines ersten Kommunikationsgeräts (3) aus der Vielzahl der Kommunikationsgeräte (3, 3', 3"), 3‴);
- Erzeugen, durch das erste Kommunikationsgerät (3) aus der Vielzahl von Kommunikationsgeräten (3, 3', 3", 3‴), einer Nachricht, die die Information enthält, dass das erste Kommunikationsgerät (3) nicht stummgeschaltet ist;
- Verteilen, durch das erste Kommunikationsgerät (3) aus der Vielzahl von Kommunikationsgeräten (3, 3', 3", 3‴), der Nachricht an die anderen Kommunikationsgeräte (3', 3", 3‴) aus der Vielzahl von Kommunikationsgeräten (3, 3', 3", 3‴), so dass beim Empfangen der Nachricht durch die anderen Kommunikationsgeräte (3', 3', 3‴) aus der Vielzahl von Kommunikationsgeräten (3, 3', 3", 3‴) die jeweiligen Mikrofone (5', 5", 5‴) der anderen Kommunikationsgeräte (3', 3", 3‴) aus der Vielzahl von Kommunikationsgeräten (3, 3', 3", 3‴) automatisch stummgeschaltet werden,
**dadurch gekennzeichnet, dass**
der Schritt des Verteilens der Nachricht durch direkte Übertragung der Nachricht von dem ersten Kommunikationsgerät (3) zu den anderen Kommunikationsgeräten (3', 3", 3‴) erfolgt, insbesondere mittels Peer-to-Peer-Kommunikation, insbesondere über XMPP oder MQTT, durch Nahfeldkommunikation, insbesondere über Bluetooth.

2. Computerimplementiertes Verfahren nach Anspruch 1, wobei das Aufheben der Stummschaltung des ersten Kommunikationsgeräts (3) aus der Vielzahl von Kommunikationsgeräten (3, 3', 3", 3‴) daraus resultiert, dass der Benutzer (2) eine an dem ersten Kommunikationsgerät (3) vorgesehene Stummschaltungs-/- Aufhebungseinrichtung bedient.

3. Computerimplementiertes Verfahren nach Anspruch 1, wobei das Aufheben der Stummschaltung des ersten Kommunikationsgeräts (3) aus der Vielzahl von Kommunikationsgeräten (3, 3', 3", 3‴) automatisch aus dem Annehmen eines Anrufs oder dem Absetzen eines Anrufs oder dem Eintritt in eine WebRTC-Kollaborations- und/oder Kommunikationssitzung am ersten Kommunikationsgerät (3) aus der Vielzahl von Kommunikationsgeräten (3, 3', 3", 3‴) resultiert.

4. Computerimplementiertes Verfahren nach einem der vorhergehenden Ansprüche, wobei jedes Kommunikationsgerät (3) aus der Vielzahl der Kommunikationsgeräte (3, 3', 3", 3‴) eine Mikrofonsteuereinheit (7, 7', 7", 7‴) umfasst, die seine lokale Mikrofonstummschaltungsfunktion überwacht und steuert.

5. Computerimplementiertes Verfahren nach Anspruch 4, wobei die Steuereinheiten (7, 7', 7", 7‴) der Kommunikationsgeräte der Vielzahl von Kommunikationsgeräten (3, 3', 3", 3‴) über den zentralen Dienst (S) miteinander kommunizieren.

6. Computerimplementiertes Verfahren nach Anspruch 4, bei dem die Steuereinheiten (7, 7', 7", 7‴) der Kommunikationsgeräte aus der Vielzahl von Kommunikationsgeräten (3, 3', 3", 3‴) über entsprechende Sendeeinrichtungen miteinander kommunizieren.

7. Computerimplementiertes Verfahren nach einem der vorhergehenden Ansprüche, wobei sich alle Kommunikationsgeräte aus der Vielzahl der Kommunikationsgeräte (3, 3', 3", 3‴) in einem vorbestimmten Abstand zueinander befinden, insbesondere in einem Raum (8) oder in einem Gebäude.

8. Computerimplementiertes Verfahren nach einem der vorhergehenden Ansprüche, wobei das Aufheben der Stummschaltung des ersten Kommunikationsgerätes (3) aus der Vielzahl der Kommunikationsgeräte (3, 3', 3", 3‴) ferner aus dem Empfang eines Signals von einem Sensor, insbesondere einem Türsensor, einem Bewegungssensor oder aus dem Klingeln einer Türklingel resultiert.

9. Kommunikationssystem (1) mit einer Vielzahl von Kommunikationsgeräten (3, 3', 3", 3‴), die über ein Kommunikationsnetz miteinander verbunden und einem Benutzer (2) zugeordnet sind, wobei jedes Kommunikationsgerät (3, 3', 3", 3‴) eine Mikrofonsteuereinheit (7, 7', 7", 7‴) aufweist, die zur Überwachung und Steuerung seiner lokalen Mikrofonstummschaltfunktionalität gemäß dem Verfahren nach einem der vorhergehenden Ansprüche ausgelegt ist.

## Revendications

1. Procédé informatisé pour contrôler une pluralité de dispositifs de communication (3, 3', 3", 3‴) qui sont connectés les uns aux autres via un réseau de communication, dans lequel la pluralité de dispositifs de communication (3, 3', 3", 3‴) est attribuée à un utilisateur (2), le procédé comprenant les étapes suivantes :
- rétablissement du son d'un microphone (5) d'un premier dispositif de communication (3) de la pluralité de dispositifs de communication (3, 3', 3", 3'") ;
- génération, par le premier dispositif de communication (3) de la pluralité de dispositifs de communication (3, 3', 3", 3'"), d'un message comprenant l'information selon laquelle le son du premier dispositif de communication (3) est rétabli ;
- distribution, par le premier dispositif de communication (3) de la pluralité de dispositifs de communication (3, 3', 3", 3'"), du message aux autres dispositifs de communication (3', 3", 3'") de la pluralité de dispositifs de communication (3, 3', 3", 3'"), de sorte que, à la réception du message par les autres dispositifs de communication (3', 3", 3'") de la pluralité de dispositifs de communication (3, 3', 3", 3'"), les microphones respectifs (5', 5‴, 5‴) des autres dispositifs de communication (3', 3", 3'") de la pluralité de dispositifs de communication (3, 3", 3", 3'") sont automatiquement désactivés,
**caractérisé en ce que**
l'étape de distribution du message est réalisée en transmettant le message du premier dispositif de communication (3) respectivement aux autres dispositifs de communication (3', 3", 3'") de façon directe, notamment au moyen d'une communication d'égal à égal, en particulier via XMPP ou MQTT, par une communication en champ proche, en particulier via Bluetooth.

2. Procédé informatisé selon la revendication 1, dans lequel le rétablissement du son du premier dispositif de communication (3) de la pluralité de dispositifs de communication (3, 3', 3", 3'") résulte de l'actionnement par l'utilisateur (2) d'un moyen de coupure/rétablissement du son fourni sur le premier dispositif de communication (3).

3. Procédé informatisé selon la revendication 1, dans lequel le rétablissement du son du premier dispositif de communication (3) de la pluralité de dispositifs de communication (3, 3', 3", 3'") résulte automatiquement de l'acceptation d'un appel, de l'émission d'un appel ou de l'entrée dans une session de collaboration et/ou de communication WebRTC du premier dispositif de communication (3) de la pluralité de dispositifs de communication (3, 3', 3", 3'").

4. Procédé informatisé selon l'une des revendications précédentes, dans lequel chaque dispositif de communication (3) de la pluralité de dispositifs de communication (3, 3', 3", 3'") comprend une unité de commande de microphone (7, 7', 7", 7'"), qui surveille et contrôle sa fonctionalité locale de coupure de microphone.

5. Procédé informatisé selon la revendication 4, dans lequel les unités de contrôle (7, 7', 7", 7‴) des dispositifs de communication de la pluralité de dispositifs de communication (3, 3', 3", 3'") communiquent entre elles par l'intermédiaire du service central (S).

6. Procédé informatisé selon la revendication 4, dans lequel les unités de contrôle (7, 7', 7", 7‴) des dispositifs de communication de la pluralité de dispositifs de communication (3, 3', 3", 3'") communiquent entre elles par l'intermédiaire de moyens de transmission respectifs.

7. Procédé informatisé selon l'une des revendications précédentes, dans lequel tous les dispositifs de communication de la pluralité de dispositifs de communication (3, 3', 3", 3'") sont situés à une distance prédéterminée les uns des autres, en particulier dans une pièce (8) ou dans un bâtiment.

8. Procédé informatisé selon l'une des revendications précédentes, dans lequel le rétablissement du son du premier dispositif de communication (3) de la pluralité de dispositifs de communication (3, 3', 3", 3'") résulte également de la réception d'un signal provenant d'un capteur, en particulier d'un capteur de porte, d'un capteur de mouvement ou de la sonnerie d'une porte d'entrée.

9. Système de communication (1) comprenant plusieurs dispositifs de communication (3, 3', 3", 3'") reliés entre eux par un réseau de communication et affectés à un utilisateur (2), dans lequel chaque dispositif de communication (3, 3', 3", 3'") comprend une unité de contrôle du microphone (7, 7', 7", 7'") conçue pour surveiller et contrôler sa fonctionalité locale de coupure du microphone selon le procédé décrit dans l'une des revendications précédentes.
